# EUROPÄISCHE PATENTSCHRIFT

(11) **EP 0 684 155 B1**
(45) Veröffentlichungstag und Bekanntmachung des Hinweises auf die Patenterteilung: **16.07.1997**
(21) Anmeldenummer: 95106517.6
(22) Anmeldetag: 29.04.1995
(51) Int. Cl.: B60R 1/08

(54) **Innenrückblickspiegel für Fahrzeuge**
Inside rear-view mirror for vehicles
Rétroviseur intérieur pour véhicules

(30) Priorität: 26.05.1994 DE 4418357
(43) Veröffentlichungstag der Anmeldung: 29.11.1995
(73) Patentinhaber: REITTER & SCHEFENACKER GmbH & Co. KG, D-73730 Esslingen (DE)
(72) Erfinder: Mertens, Jens, D-71735 Hochdorf/Enz (DE); Weller, Klaus, D-73061 Ebersbach (DE)
(74) Vertreter: Jackisch-Kohl, Anna-Katharina

(56) Entgegenhaltungen:
- DE-A- 2 406 381
- FR-A- 2 491 845
- US-A- 3 004 473
- US-A- 3 507 562

## Beschreibung

Die Erfindung betrifft einen Innenrückblickspiegel für Fahrzeuge nach dem Oberbegriff des Anspruches 1.

Bei einem bekannten Innenrückblickspiegel dieser Art (US-A-3 507 562) ragt der Drehteil mit dem Kulissenzapfen in eine schlitzförmige Kulissenführung des Halters. Mit der Handhabe wird der Drehteil gedreht, wobei das Spiegelgehäuse mit dem Spiegelglas über den Kulissenzapfen aus der einen in die andere Stellung geschwenkt wird. In den beiden Stellungen liegt der Kulissenzapfen jeweils am Ende des Schlitzes des Halters an. Dabei besteht die Gefahr, daß zumindest in der einen Stellung beispielsweise infolge von Erschütterungen das Spiegelgehäuse unbeabsichtigt in die andere Stellung zurückschwenkt.

Es ist auch ein Innenrückblickspiegel bekannt (DE-U-91 01 986), bei dem der Drehteil mit einem Führungsschlitz versehen ist, in den ein Führungsteil des Halters eingreift. In den beiden Stellungen liegt der Führungsteil jeweils unter Federkraft am Ende des Führungsschlitzes an. Auch bei diesem bekannten Innenrückblickspiegel besteht die Gefahr, daß das Spiegelgehäuse unbeabsichtigt verschwenken kann.

Der Erfindung liegt die Aufgabe zugrunde, den gattungsgemäßen Innenrückblickspiegel so auszubilden, daß ein unbeabsichtigtes Verstellen des Spiegelglases in der jeweiligen Stellung sicher verhindert ist.

Diese Aufgabe wird beim gattungsgemäßen Innenrückblickspiegel erfindungsgemäß mit den kennzeichnenden Merkmalen des Anspruches 1 gelöst.

Beim erfindungsgemäßen Innenrückblickspiegel liegt der Arretierteil in der einen Stellung des Glasträgers an der Außenseite der Kulissenführung an. Der Arretierteil bildet ein Widerlager, durch welches auf zuverlässige Weise verhindert wird, daß das Spiegelglas unbeabsichtigt in die andere Stellung kippt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Vorderansicht und teilweise in aufgerissener Darstellung einen erfindungsgemäßen Innenrückblickspiegel,
- Fig. 2: einen Querschnitt durch den Innenrückblickspiegel gemäß Fig. 1,
- Fig. 3: einen Schnitt längs der Linie III-III in Fig. 2,
- Fig. 4: in einer Darstellung entsprechend Fig. 2 den Innenrückblickspiegel in Abblendstellung,
- Fig. 5: einen Schnitt längs der Linie V-V in Fig. 4.

Der Innenrückblickspiegel ist für Kraftfahrzeuge vorgesehen und ist als Innenspiegel ausgebildet. Er hat einen Spiegelfuß 1, mit dem der Innenrückblickspiegel in bekannter Weise am Kraftfahrzeug befestigt wird. Der Spiegelfuß 1 ragt durch eine Öffnung 2 in ein Spiegelgehäuse 3, an dessen dem Fahrer zugewandter Seite ein Keilspiegelglas 4 vorgesehen ist. Es ist auf einem Glasträger 5 befestigt, der innerhalb des Spiegelgehäuses 3 liegt und mit einer Schaltplatte 6 verbunden ist. Die Schaltplatte 6 hat eine Gelenkpfanne 7, mit der sie auf einem Kugelkopf 8 sitzt. Er ist innerhalb des Spiegelgehäuses 3 am freien Ende des Spiegelfußes 1 vorgesehen. Über dieses Kugelgelenk 7,8 läßt sich das Spiegelgehäuse 3 und damit das Keilspiegelglas 4 in die gewünschte Lage relativ zum Fahrer des Kraftfahrzeuges verstellen.

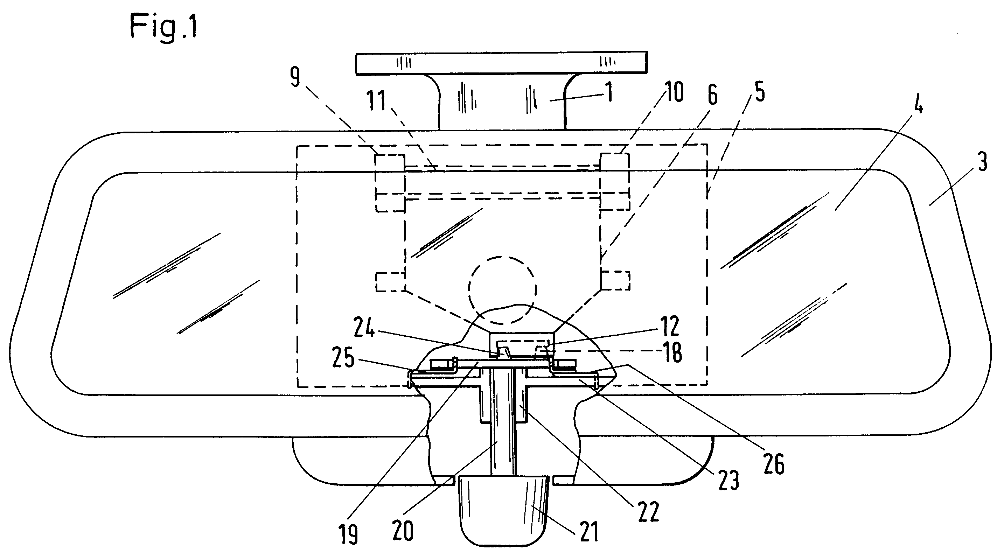

Von der Rückseite des Glasträgers 5 stehen zwei Laschen 9 und 10 (Fig. 1) senkrecht ab, in welche die Enden einer Achse 11 der Schaltplatte 6 eingreifen. Dadurch kann der Glasträger 5 mit dem Keilspiegelglas 4 relativ zur Schaltplatte 6 in noch zu beschreibender Weise geschwenkt werden.

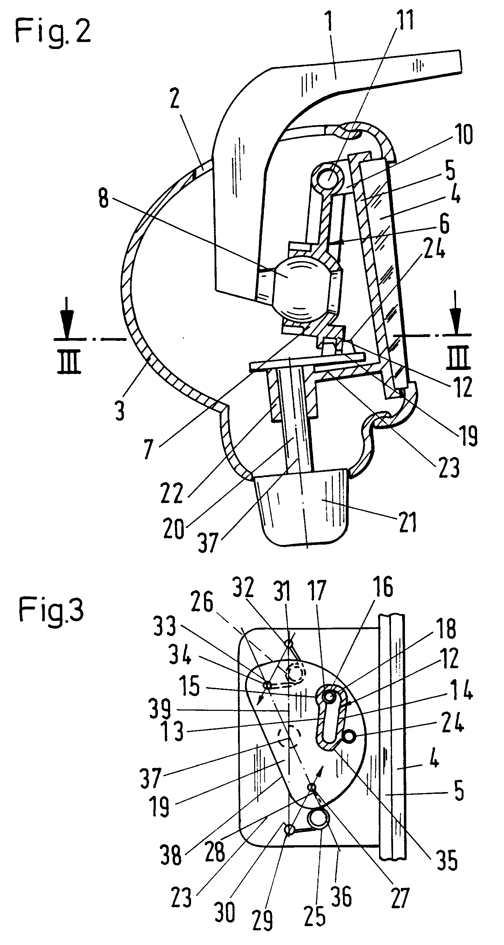

Die Schaltplatte 6 ist an ihrer der Achse 11 gegenüberliegenden Seite mit einer Kulissenführung 12 versehen, die vorzugsweise einstückig mit der Schaltplatte ausgebildet ist. Die Kulissenführung 12 hat die in Fig. 3 dargestellte, annähernd ovale Form. Wie Fig. 3 zeigt, hat die Kulissenführung 12 parallel zueinander verlaufende Wandabschnitte 13 und 14, die an einem Ende teilkreisförmig ineinander übergehen. Der Wandabschnitt 13 geht am anderen Ende in einen in bezug auf den Wandabschnitt 14 divergierend verlaufenden Zwischenwandabschnitt 15 in einen teilkreisförmig gekrümmt verlaufenden Stirnabschnitt 16 über, der den Zwischenwandabschnitt 15 mit dem Wandabschnitt 14 verbindet, der über seine Länge gerade verläuft. Aufgrund des Zwischenwandabschnittes 15 weist die Kulissenführung 12 eine Rastaufnahme 17 für einen Kulissenzapfen 18 auf, der auf einer Drehscheibe 19 vorgesehen ist. Sie ist auf dem oberen, innerhalb des Spiegelgehäuses liegenden Ende einer Welle 20 vorgesehen, die am unteren Ende einen außerhalb des Spiegelgehäuses frei liegenden Drehknopf 21 trägt. Vorteilhaft sind die Drehscheibe 19 und die Welle 20 oder die Welle 20 und der Drehknopf 21 einstückig ausgebildet. Mit dem Drehknopf 21 läßt sich die Drehscheibe 19 zum Verstellen des Glasträgers 5 leicht drehen.

Die Welle 20 wird über einen Teil ihrer Länge in einer Buchse 22 geführt, die mit dem Glasträger 5 über einen Quersteg 23 verbunden ist. Die Buchse 22, der Quersteg 23 und der Glasträger 5 sind vorteilhaft einstückig ausgebildet.

Der Drehknopf 21 ist im Spiegelgehäuse 3 über die Welle 20 und die Buchse 22 drehbar gelagert. Der Quersteg 23 hat, wie Fig. 3 zeigt, Rechteckform und steht von der Rückseite der Glasträgerplatte 5 senkrecht ab. Die Drehscheibe 19 hat etwa Halbkreisform und weist auf ihrer der Kulissenführung 12 zugewandten Seite den Kulissenzapfen 18 sowie einen Arretierzapfen 24 auf. Beide Zapfen stehen senkrecht von der Drehscheibe 19 auf der von der Welle 20 abgewandten Seite vor.

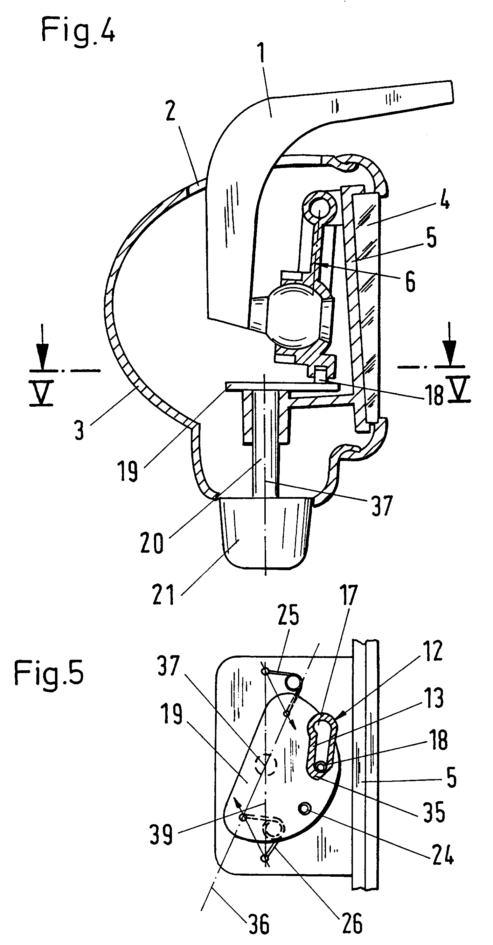

Die Wandabschnitte 13 bis 16 der Kulissenführung 12 stehen senkrecht von der Unterseite der Schaltplatte 6 ab und bilden eine umlaufende Wand, die vorteilhaft einstückig mit der Schaltplatte 6 ausgebildet ist. Zumindest der Kulissenzapfen 18 ist als Kegelstumpf ausgebildet, der in Richtung auf sein freies Ende verjüngt ausgebildet ist. Dadurch ist ein einwandfreier Eingriff des Kulissenzapfens 18 in die Kulissenführung 12 gewährleistet, wenn diese winklig zur Drehscheibe 19 liegt (Fig. 2 und 4).

An der Drehscheibe 19 greifen an zwei einander gegenüberliegenden Stellen Schenkelfedern 25 und 26 an (Fig. 1 und 3), die im Bereich zwischen dem Quersteg 23 des Glasträgers 5 und der Drehscheibe 19 liegen (Fig. 1). Die Schenkelfeder 25 ist mit einem abgewinkelten Ende 27 in eine Öffnung 28 der Drehscheibe 19 und mit einem anderen abgewinkelten Ende 29 in eine Öffnung 30 des Quersteges 23 eingehängt. In gleicher Weise ist auch die andere Schenkelfeder 26 mit einem abgewinkelten Ende 31 in eine Öffnung 32 des Quersteges 23 und mit einem abgewinkelten Ende 33 in eine Öffnung 34 der Drehscheibe 19 eingehängt.

In den Fig. 2 und 3 ist das Spiegelgehäuse 3 mit dem Keilspiegelglas 4 in einer ersten Stellung relativ zur Schaltplatte 6 eingestellt. Diese Stellung ist beispielsweise die Tagstellung des Innenrückblickspiegels. Der Kulissenzapfen 18 liegt in der Rastaufnahme 17 der Kulissenführung 12 (Fig. 3). Der Arretierzapfen 24 liegt an der Außenseite des Wandabschnittes 14 am Übergang in den gekrümmten Verbindungsabschnitt 35 der Kulissenführung 12 an. Dadurch ist das Spiegelgehäuse 3 einwandfrei gegen das Umschalten von der Stellung nach Fig. 2 in die Kippstellung nach Fig. 4 gesichert. Die Drehscheibe 19 steht unter der Kraft der beiden Schenkelfedern 25, 26, welche die Drehscheibe so belasten, daß der Kulissenzapfen 18 und der Arretierzapfen 24 gegen die Kulissenführung 12 gedrückt werden. Eine die Achsen der Einhängeöffnungen 28, 34 der Drehscheibe 19 verbindende Gerade 26 (Fig. 3) bildet eine Wirklinie der beiden Schenkelfedern 25, 26. Die Wirklinie 36 geht durch die Achse 37 der Welle 20. Wie Fig. 3 zeigt, liegt die Wirklinie 36 parallel zum geraden Rand 38 der Drehscheibe 19 sowie unter einem spitzen Winkel zum Wandabschnitt 13 der Kulissenführung 12 (Fig. 3) bzw. zur Gelenkachse 11 des Glasträgers 5, in Richtung der Achse 37 der Welle 20 gesehen. Dieser Winkel öffnet sich in Richtung auf die Schenkelfeder 26. Die Welle 20 des Drehknopfes 21 ist in dieser Stellung des Spiegelgehäuses 3 in Richtung auf den Fahrer des Kraftfahrzeuges geneigt angeordnet (Fig. 2). Außerdem liegt die Wirklinie 36 bezüglich einer die Einhängeöffnungen 30, 32 des Quersteges 23 verbindenden Geraden 39 auf der einen Seite dieser Geraden 39 Fig. 3).

Mit dem Drehknopf 21 läßt sich das Spiegelgehäuse 3 mit dem Keilspiegelglas 4 in eine zweite Stellung, beispielsweise die Nachtstellung, verstellen (Fig. 4 und 5). Hierzu wird der Drehknopf 21 so gedreht, daß der Kulissenzapfen 18 in der Kulissenführung 12 aus der Rastaufnahme 17 freikommt und in die in Fig. 5 dargestellte Lage gelangt, in der der Kulissenzapfen 18 am gekrümmten Verbindungsabschnitt 35 der Kulissenführung 12 anliegt. Die Schenkelfedern 25 und 26 sorgen dafür, daß die Drehscheibe 19 auch in dieser Stellung durch Federkraft gesichert ist. Die Wirklinie 36 verläuft in diesem Falle ebenfalls spitzwinklig zum Wandabschnitt 13 der Kulissenführung 12, jedoch öffnet sich der Winkel in Richtung auf die Schenkelfeder 26. Außerdem liegt die Wirklinie 36 auf der anderen Seite der Geraden 39 (Fig. 5). Der Arretierzapfen 24 liegt hierbei mit Abstand von der Kulissenführung 12 (Fig. 5). Bei dieser Drehbewegung der Drehscheibe 19 wird der Kulissenzapfen 18, in Draufsicht auf die Drehscheibe 19 gesehen, innerhalb der ortsfesten Kulissenführung 12 im Uhrzeigersinn bewegt. Da die Wandabschnitte 13 und 14 der Kulissenführung 12 parallel zueinander verlaufen und einen in Richtung auf die Schenkelfeder sich öffnenden spitzen Winkel mit der Rückseite des Glasträgers 5 bzw. mit dessen Gelenkachse 11 einschließen, in Draufsicht auf die Drehscheibe 19 bzw. in Richtung der Drehachse 37 gesehen, und der Kulissenzapfen 18 eine Kreisbewegung um die Achse 37 der Welle 20 ausführt, wird der Glasträger 5 in Richtung auf die Schaltplatte 6 geschwenkt. Da das Keilspiegelglas 4 fest mit dem Gehäuse 3 verbunden ist, wird in gleichem Maße das Spiegelgehäuse gegenüber dem Spiegelfuß 1 verschwenkt, der zusammen mit der Schaltplatte 6 ortsfest angeordnet ist. Infolge der Schwenkbewegung des Spiegelgehäuses 3 wird die Welle 20 bei ihrer Drehbewegung in eine vertikale Lage gebracht (Fig. 4). Durch diese Drehbewegung wird das Spiegelgehäuse 3 zusammen mit dem Glasträger 5 und dem Keilspiegelglas 4 relativ zur Schaltplatte 6 und zum Spiegelfuß 1 verschwenkt. Die Öffnung 2 im Spiegelgehäuse 3 ist ausreichend groß, um sowohl die beschriebene Verstellung des Spiegelgehäuses mittels des Drehknopfes 21 als auch die Einstellung des Innenrückblickspiegels in bezug auf den Fahrer zu ermöglichen.

Die Schaltplatte 6 sitzt ausreichend fest auf dem Kugelkopf 8 des Spiegelfußes 1, so daß durch Verdrehen des Spiegelgehäuses 3 von oben nach unten oder umgekehrt die Lage der Schaltplatte 6 nicht verändert wird. Durch Zurückdrehen des Drehknopfes 21 gelangt darum das Spiegelgehäuse wieder in seine Ausgangsstellung. Da der Glasträger 5 über die Laschen 9, 10 und die Achse 11 schwenkbar mit der Schaltplatte 6 verbunden ist, läßt sich das Spiegelgehäuse 3 sehr einfach zwischen den beiden Stellungen hin- und herschalten.

Je nach Lage der Schaltplatte 6 auf dem Kugelkopf 8 kann die Kulissenführung 12 geneigt oder auch horizontal angeordnet sein.

Mit dem Drehknopf 21 läßt sich der Innenrückblickspiegel einfach und rasch in eine Tag- und in eine Nachtstellung (Abblendstellung) verstellen. Die Schenkelfedern 25, 26 üben in beiden Stellungen eine solche Kraft auf den Kulissenzapfen 18 aus, daß er sowohl in der Rastaufnahme 17 der Kulissenführung als auch am Verbindungsabschnitt 35 jeweils unter einer Druckkraft steht und fest gegen den jeweiligen Wandabschnitt der Kulissenführung 12 gedrückt wird. Die Verstelleinrichtung ist konstruktiv einfach ausgebildet und erlaubt dennoch eine genaue und rasche Verstellung des Spiegelgehäuses 3. Die Montage des Innenrückblickspiegels läßt sich mühelos durchführen.

## Patentansprüche

1. Innenrückblickspiegel für Fahrzeuge, mit einem Spiegelfuß (1), der über ein Kugelgelenk (8) ein Spiegelgehäuse (3) trägt, das mit einem Spiegelglas (4) versehen ist, das auf einem Glasträger (5) befestigt ist, der zusammen mit dem Spiegelgehäuse (3) relativ zum Spiegelfuß (1) zwischen einer ersten Stellung, vorzugsweise einer Tagstellung, und einer zweiten Stellung, vorzugsweise einer Nachtstellung, mittels einer Handhabe (21) verstellbar und an einem Halter (6) angelenkt ist, der über eine Kulissenführung (12) mit einem Drehteil (19) verbunden ist, der drehfest mit der Handhabe (12) verbunden ist und einen Kulissenzapfen (18) aufweist, der in die am Halter (6) vorgesehene Kulissenführung (12) eingreift,
dadurch gekennzeichnet, daß der Drehteil (19) mit einem Arretierteil (24) versehen ist, der in der einen Stellung des Glasträgers (5) an der Außenseite der Kulissenführung (12) anliegt.

2. Innenrückblickspiegel nach Anspruch 1,
dadurch gekennzeichnet, daß der Halter (6) kugelgelenkig auf dem Spiegelfuß (1) gelagert ist.

3. Innenrückblickspiegel nach Anspruch 1 oder 2,
dadurch gekennzeichnet, daß die Kulissenführung (12) durch eine vom Halter (6) abstehende umlaufende Wand gebildet ist.

4. Innenrückblickspiegel nach einem der Ansprüche 1 bis 3,
dadurch gekennzeichnet, daß die Kulissenführung (12) eine Rastaufnahme (17) für den Kulissenzapfen (18) in der einen Stellung des Glasträgers (5) aufweist.

5. Innenrückblickspiegel nach einem der Ansprüche 1 bis 4,
dadurch gekennzeichnet, daß der Drehteil (19) in der ersten und/oder in der zweiten Stellung derart belastet ist, daß der Kulissenzapfen (18) gegen die Kulissenführung (12) gedrückt ist.

6. Innenrückblickspiegel nach Anspruch 5,
dadurch gekennzeichnet, daß am Drehteil (19) an einander gegenüberliegenden Seiten, bezogen auf die Drehachse (37) des Drehteiles (19), jeweils eine Feder (25, 26), vorzugsweise eine Schenkelfeder, angreift.

7. Innenrückblickspiegel nach Anspruch 6,
dadurch gekennzeichnet, daß die Federn (25, 26) mit dem Glasträger (5), vorzugsweise mit einem von seiner Rückseite abstehenden Steg (23), verbunden sind.

8. Innenrückblickspiegel nach einem der Ansprüche 1 bis 7,
dadurch gekennzeichnet, daß die Kulissenführung (12), in Richtung der Drehachse (37) des Drehteiles (19) gesehen, quer zur Drehachse gerade verläuft.

9. Innenrückblickspiegel nach einem der Ansprüche 1 bis 8,
dadurch gekennzeichnet, daß sich die Kulissenführung (12), in Richtung der Drehachse (37) des Drehteiles (19) gesehen, unter einem spitzen Winkel zur Gelenkachse (11) des Glasträgers (5) erstreckt.

10. Innenrückblickspiegel nach einem der Ansprüche 6 bis 9,
dadurch gekennzeichnet, daß die beiden am Drehteil (19) angreifenden Federn (25, 26) eine Wirklinie (36) haben, die in beiden Stellungen des Glasträgers (5) unter einem Winkel zur Gelenkachse (11) des Glasträgers liegt, in Richtung der Drehachse (37) des Drehteiles (19) gesehen.

## Claims

1. An interior rear-view mirror for vehicles, with a mirror base (1) supporting a mirror casing (3) by way of a ball-and-socket joint (8), the mirror casing (3) being provided with a mirror glass (4) secured to a support (5) displaceable together with the mirror casing (3) relative to the mirror base (1) between a first position, preferably a day-time position, and a second position, preferably a night-time position, by means of a handle (21) and articulated to a holder (6) connected by way of a link guide (12) to a rotary part (19) connected in a rotationally fixed manner to the handle (12) [*sic - recte* (21)] and comprising a link pin (18) engaging in the link guide (12) provided on the holder (6),
**characterized in that** the rotary part (19) is provided with a locking part (24) resting in one position of the glass support (5) against the outside of the link guide (12).

2. An interior rear-view mirror according to Claim 1, **characterized in that** the holder (6) is mounted on the mirror base (1) by a ball-and-socket joint.

3. An interior rear-view mirror according to Claim 1 or 2, **characterized in that** the link guide (12) is formed by a continuous wall projecting from the holder (6).

4. An interior rear-view mirror according to one of Claims 1 to 3, **characterized in that** the link guide (12) has a detent (17) for the link pin (18) in one position of the glass support (5).

5. An interior rear-view mirror according to one of Claims 1 to 4, **characterized in that** the rotary part (19) is loaded in the first and/or second position in such a way that the link pin (18) is pressed against the link guide (12).

6. An interior rear-view mirror according to Claim 5, **characterized in that** a spring (25, 26), preferably a leg spring, respectively engages the rotary part (19) at mutually opposite sides with respect to the axis of rotation (37) of the rotary part (19).

7. An interior rear-view mirror according to Claim 6, **characterized in that** the springs (25, 26) are connected to the glass support (5), preferably by a web (23) projecting from the rear of the said glass support (5).

8. An interior rear-view mirror according to one of Claims 1 to 7, **characterized in that** the link guide (12) extends in a straight manner transversely to the axis of rotation (37) of the rotary part (19), as viewed in the direction of the axis of rotation.

9. An interior rear-view mirror according to one of Claims 1 to 8, **characterized in that** the link guide (12) extends at an acute angle to the axis of articulation (11) of the glass support (5), as viewed in the direction of the axis of rotation (37) of the rotary part (19).

10. An interior rear-view mirror according to one of Claims 6 to 9, **characterized in that** the two springs (25, 26) engaging the rotary part (19) have a line of action (36) orientated at an angle to the axis of articulation (11) of the glass support (5) in both positions of the glass support, as viewed in the direction of the axis of rotation (37) of the rotary part (19).

## Revendications

1. Rétroviseur intérieur pour véhicules, comprenant un pied de miroir (1) qui porte, par l'intermédiaire d'une articulation à rotule (8), un boîtier de miroir (3) qui est muni d'un verre de miroir (4), lui-même fixé sur un porte-verre (5) qui, avec le boîtier de miroir (3) peut être déplacé par rapport au pied de miroir (1) entre une première position, de préférence une position de jour, et une deuxième position, de préférence une position de nuit, au moyen d'une manette (21), et est articulé sur un support (6), lequel est relié, par l'intermédiaire d'un guide à coulisse (12), à une partie tournante (19) qui est elle-même reliée solidairement en rotation à la manette (12) et présente un doigt de coulisse (18) qui est engagé dans le guide à coulisse (12) prévu sur le support (6), caractérisé en ce que la partie tournante (19) est munie d'une partie d'arrêt (24) qui est en appui contre le côté extérieur du guide à coulisse (12) dans une position du porte-verre (5).

2. Rétroviseur intérieur selon la revendication 1,
caractérisé en ce que le support (6) est monté sur le pied de miroir (1) par une articulation à rotule.

3. Rétroviseur intérieur selon la revendication 1 ou 2,
caractérisé en ce que le guide à coulisse (12) est formé par une paroi périphérique qui fait saillie sur le support (6).

4. Rétroviseur intérieur selon une des revendications 1 à 3,
caractérisé en ce que le guide à coulisse (12) présente un logement d'arrêt (17) pour recevoir le doigt de coulisse (18) dans une position du porte-verre (5).

5. Rétroviseur intérieur selon une des revendications 1 à 4,
caractérisé en ce que la partie tournante (19) est chargée dans la première et/ou dans la deuxième position de telle manière que le doigt de coulisse (18) soit pressé contre le guide à coulisse (12).

6. Rétroviseur intérieur selon la revendication 5,
caractérisé en ce que la partie tournante (19) est attaquée, sur chacun de deux côtés opposés mutuellement de part et d'autre de l'axe de rotation (37) de la partie tournante (19), par un ressort (25, 26), de préférence par un ressort à branches.

7. Rétroviseur intérieur selon la revendication 6,
caractérisé en ce que les ressorts (25, 26) sont reliés au porte-verre (5), de préférence à un voile (23) qui fait saillie sur sa face arrière.

8. Rétroviseur intérieur selon une des revendications 1 à 7,
caractérisé en ce que le guide à coulisse (12) s'étend en ligne droite transversalement à l'axe de rotation, vu dans une direction parallèle à l'axe de rotation (37) de la partie tournante (19).

9. Rétroviseur intérieur selon une des revendications 1 à 8,
caractérisé en ce que le guide à coulisse (12) s'étend en formant un angle aigu par rapport à l'axe d'articulation (11) du porte-verre (5), vu dans une direction parallèle à l'axe de rotation (37) de la partie tournante (19).

10. Rétroviseur intérieur selon une des revendications 6 à 9,
caractérisé en ce que les deux ressorts (25, 26) qui attaquent la partie tournante (19) ont une droite d'action (36) qui, dans les deux positions du porte-verre (5), forment un angle avec l'axe d'articulation (11) du porte-verre, vu dans une direction parallèle à l'axe de rotation (37) de la partie tournante (19).
